# EUROPEAN PATENT APPLICATION

(11) **EP 4 679 917 A1**
(43) Date of publication of application: **14.01.2026**
(21) Application number: 24784952.4
(22) Date of filing: 04.04.2024
(51) Int. Cl.: H04W 72/20, H04W 4/06

(54) **COMMUNICATION METHOD**

(30) Priority: 05.04.2023 US 202363494322 P
(71) Applicant: Kyocera Corporation, Kyoto-shi, Kyoto 6128501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2024/013918
(87) International publication number: WO 2024/210170

(57) **Abstract**

A communication method used in a mobile communication system for providing a multicast/broadcast service (MBS) includes: providing, by a base station, two types of multicast control channels (MCCHs) being a first MCCH for a broadcast communication service and a second MCCH for a multicast communication service; and transmitting, by the base station to a user equipment, mapping information indicating a correspondence relationship between an MBS session identifier of an MBS session and a type of the MCCH for transmitting a Point-to-Multipoint (PTM) configuration corresponding to the MBS session.

## Description

### TECHNICAL FIELD

The present disclosure relates to a communication method used in a mobile communication system.

### BACKGROUND OF INVENTION

The 3rd Generation Partnership Project (3GPP) has defined the technical specifications of New Radio (NR) that is a radio access technology of the fifth generation (5G). NR has features such as high speed, large capacity, high reliability, and low latency as compared to Long Term Evolution (LTE) that is a radio access technology of the fourth generation (4G). The 3GPP has defined technical specifications of multicast/broadcast services (MBS) of 5G/NR.

In 3GPP Release 17, MBS multicast reception (i.e., multicast reception) is possible only for a user equipment in a radio resource control (RRC) connected state (see, for example, Non-Patent Document 1). On the other hand, in 3GPP Release 18, technical specifications are scheduled to be extended so that a user equipment in an RRC inactive state can perform multicast reception.

### CITATION LIST

### NON-PATENT LITERATURE

Non-Patent Document 1: 3GPP Technical Specification: TS 38.300 V17.3.0

### SUMMARY

A communication method of a first aspect is a method used in a mobile communication system for providing a multicast/broadcast service (MBS). The communication method includes the steps of: providing, by a network node, two types of multicast control channels (MCCHs) being a first MCCH for a broadcast communication service and a second MCCH for a multicast communication service on a cell of the network node; and transmitting, by the network node to a user equipment, mapping information indicating a correspondence relationship between an MBS session identifier of an MBS session and a type of an MCCH for transmitting a Point-to-Multipoint (PTM) configuration corresponding to the MBS session.

A communication method of a second aspect is a method used in a mobile communication system for providing a multicast/broadcast service (MBS). The communication method includes: transmitting, by a network node, a first Point-To-Multipoint (PTM) configuration including an MBS session identifier of a broadcast MBS session on a first multicast control channel (MCCH) for a broadcast communication service; transmitting, by the network node, a second PTM configuration including an MBS session identifier of a multicast MBS session on a second MCCH for a multicast communication service; and controlling, by the network node, MCCH transmission so as not to transmit a PTM configuration including the same MBS session identifier on the first MCCH and on the second MCCH.

### BRIEF DESCRIPTION OF THE DRAWINGS

FIG. 1 is a diagram illustrating a configuration example of a mobile communication system according to an embodiment.
FIG. 2 is a diagram illustrating a configuration example of a user equipment (UE) according to the embodiment.
FIG. 3 is a diagram illustrating a configuration example of a gNB (base station) according to the embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram for describing a system operation example according to the embodiment.
FIG. 7 is a diagram illustrating an example of a first operation pattern according to the embodiment.
FIG. 8 is a flowchart illustrating an operation example of the gNB according to a second operation pattern.
FIG. 9 is a flowchart illustrating an operation example of the UE according to the second operation pattern.

### DESCRIPTION OF EMBODIMENTS

A mobile communication system according to an embodiment is described with reference to the drawings. In the description of the drawings, the same or similar parts are denoted by the same or similar reference signs.

### (1) System Configuration

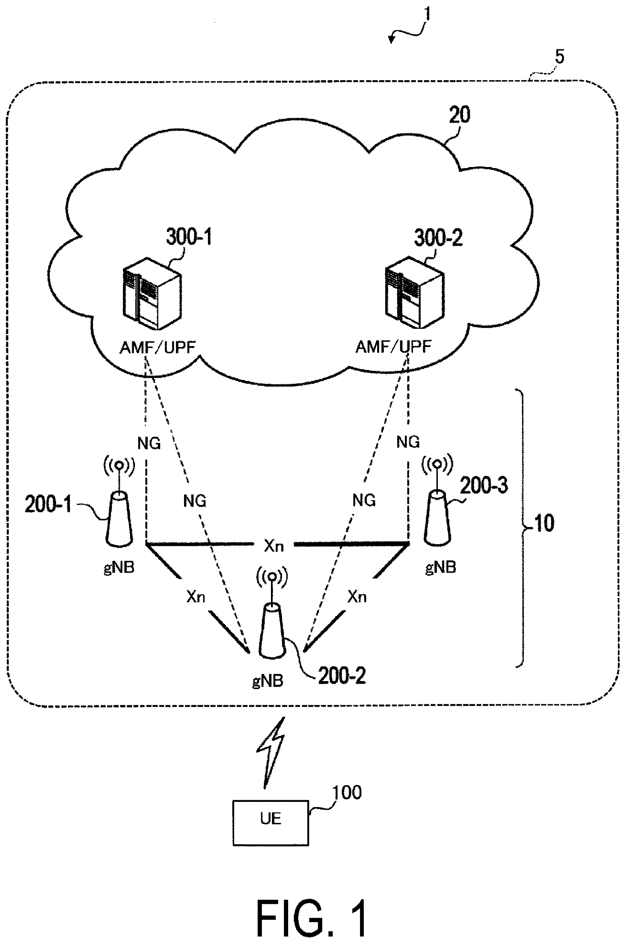

FIG. 1 is a diagram illustrating a configuration example of a mobile communication system 1 according to the embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 constitute a network of the mobile communication system 1.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

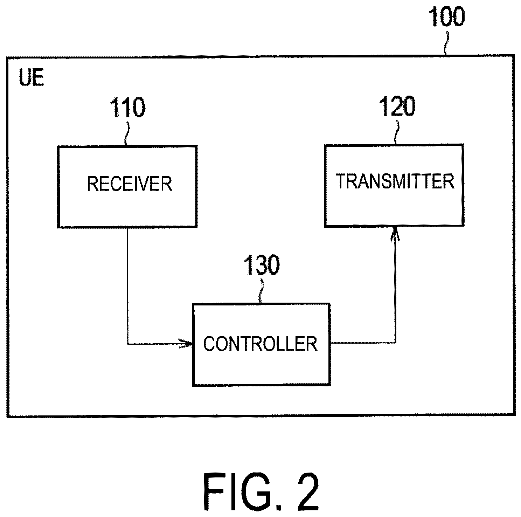

FIG. 2 is a diagram illustrating a configuration example of the UE 100 (user equipment) according to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various receptions under the control of the controller 130. The receiver 110 includes an antenna and a reception device. The reception device converts a radio signal received through the antenna into a baseband signal (a reception signal) and outputs the resulting signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various controls and processes in the UE 100. Such processing includes processing of respective layers to be described below. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

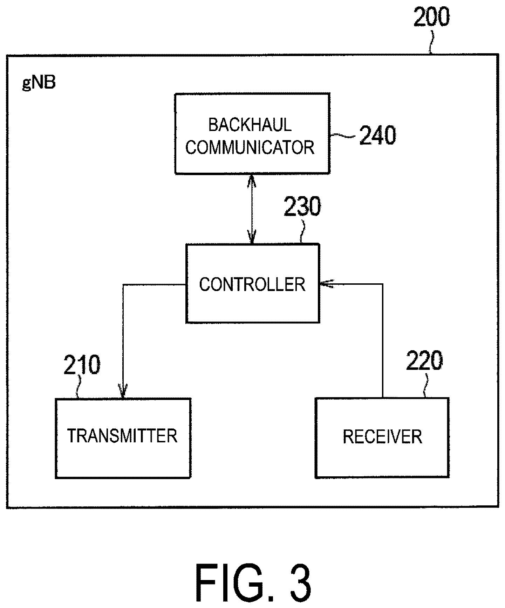

FIG. 3 is a diagram illustrating a configuration example of the gNB 200 (base station) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various transmissions under the control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described below. The operations of the gNB 200 described above and below may also be performed under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface between the base station and the core network. Note that the gNB 200 may include a Central Unit (CU) and a Distributed Unit (DU) (i.e., functions are divided), and both units may be connected via an F1 interface that is a fronthaul interface.

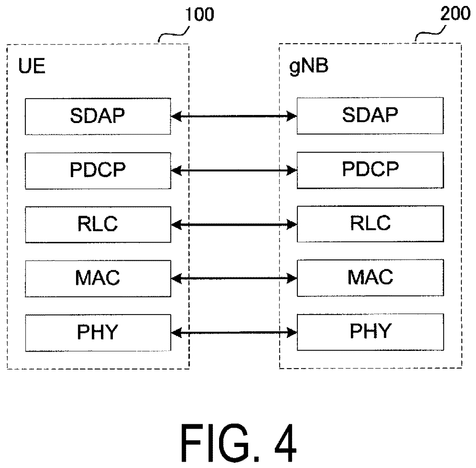

FIG. 4 is a diagram illustrating a configuration of a protocol stack of a radio interface of a user plane handling data.

A radio interface protocol of the user plane includes a PHYsical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH by using a radio network temporary identifier (RNTI) and acquires a successfully decoded DCI as a DCI addressed to the UE. The DCI transmitted from the gNB 200 is appended with CRC parity bits scrambled using the RNTI.

The MAC layer performs priority control of data, retransmission processing through hybrid ARQ (Hybrid Automatic Repeat reQuest (HARQ)), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the receiving side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

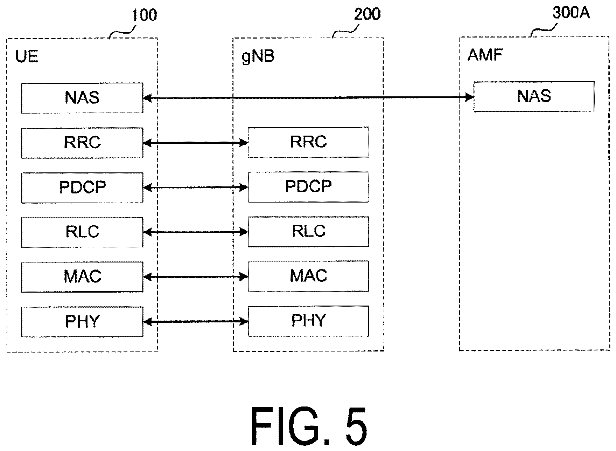

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC connected state. When connection (RRC connection) is not established between the RRC of the UE 100 and the RRC of the gNB 200, the UE 100 is in an RRC idle state. When the connection between the RRC of the UE 100 and the RRC of the gNB 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of an AMF 300A. The UE 100 includes an application layer and the like other than the protocol of the radio interface. The layer below the NAS layer is referred to as an AS layer (also simply referred to as "AS").

### (2) Overview of MBS

The mobile communication system 1 can perform delivery with high resource efficiency by using the multicast/broadcast service (MBS).

### (2.1) MBS Broadcast

In a case of the broadcast communication services (also referred to as "MBS broadcast"), the same service and the same specific content data are provided simultaneously to every UE 100 in a geographic area. That is, every UE 100 in the broadcast service area is permitted to receive the data. The broadcast communication service is delivered to the UE 100 by using a broadcast MBS session that is a type of an MBS session. The UE 100 can receive the broadcast MBS session in any state of the RRC idle state, the RRC inactive state, and the RRC connected state.

Point-to-Multipoint (PTM) delivery is applied to the broadcast communication service. In a case of the PTM transmission, the gNB 200 delivers a single copy of an MBS packet to a set (group) of the plurality of UEs 100. For example, the gNB 200 uses a group-common PDCCH with a Cyclic Redundancy Code (CRC) scrambled using a group RNTI (G-RNTI) being a group-common RNTI to schedule a group-common PDSCH scrambled using the G-RNTI.

In a case of the broadcast communication service, the UE 100 receives a broadcast MBS session with the following procedure. First, the UE 100 receives system information block type 20 (SIB20) from the gNB 200. The SIB20 includes the configuration of a multicast control channel (MCCH) that is a type of logical channel. Second, the UE 100 receives the MCCH from the gNB 200 based on the SIB20. The MCCH includes a PTM configuration (PTM configuration for broadcast). The PTM configuration includes an MBS session identifier (also referred to as a "Temporary Mobile Group Identity (TMGI)"), a configuration (MTCH configuration) related to a Multicast Traffic CHannel (MTCH) that is a type of a logical channel, and a configuration of a broadcast MRB that is a multicast radio bearer (MRB) for a broadcast MBS session. The information transmitted on the MCCH may be referred to as MBS broadcast control information. Third, the UE 100 receives the MTCH based on the MCCH. The MTCH transmits a broadcast MBS session (specifically, MBS data belonging to the broadcast MBS session).

Note that the MCCH is a PTM downlink channel for transmitting MBS broadcast control information made correspondent with one or more MTCHs from the network 10 to the UE 100. The MTCH is a PTM downlink channel for transmitting MBS data either of a multicast MBS session or a broadcast MBS session from the network 10 to the UE 100.

The MTCH configuration is a configuration made correspondent with the MBS session identifier and related to the MTCH reception, and includes, for example, at least one of: a group RNTI (G-RNTI); a discontinuous reception configuration (DRX configuration or scheduling information: MTCH transmission ON time, MTCH transmission cycle, reference time and time offset, HARQ retransmission configuration); a layer 2 configuration (PDCP configuration, RLC configuration); and a physical channel configuration (PDCCH configuration, PDSCH configuration, and SSB mapping configuration).

### (2.2) MBS Multicast

In a case of a multicast communication service (also referred to as "MBS multicast"), the same service and the same specific content data are simultaneously provided to a specific UE set. That is, not every UE 100 in the multicast service area is permitted to receive data. The multicast communication service is delivered to the UE 100 by using a multicast MBS session that is a type of an MBS session.

Note that the UE 100 can receive the multicast MBS session only after joining the multicast MBS session (session join). Here, the joining the multicast MBS session may mean that the UE 100 is registered in the network 5 (the CN 20) as being capable of receiving the multicast MBS session.

In a case of the multicast communication service, in 3GPP Release 17, only the UE 100 in the RRC connected state is capable of receiving the multicast MBS session. On the other hand, 3GPP Release 18 is planned to be enhanced for the UE 100 in the RRC inactive state also to be capable of receiving the multicast MBS session.

### (2.2.1) Multicast Reception in RRC Connected State

The UE 100 in the RRC connected state can receive the multicast MBS session (specifically, MBS data belonging to the multicast MBS session) by using mechanisms of such as a Point-to-Point (PTP) and/or a Point-to-Multipoint (PTM) delivery.

In the case of the multicast communication service, the UE 100 in the RRC connected state receives the multicast MBS session with the following procedure. First, the UE 100 receives the RRC Reconfiguration message from the gNB 200. The RRC Reconfiguration message is a message transmitted on the dedicated control channel (DCCH). The RRC Reconfiguration message transmits a configuration (MTCH configuration) related to an MTCH for receiving the multicast MBS session and a configuration of the multicast MRB that is an MRB for the multicast MBS session. Second, the UE 100 receives the MTCH based on the RRC Reconfiguration message. The MTCH transmits the multicast MBS session (specifically, MBS data belonging to the multicast MBS session).

### (2.2.2) Multicast Reception in RRC Inactive State

The UE 100 in the RRC inactive state may receive the multicast MBS session (specifically, MBS data belonging to the multicast MBS session) by using the mechanism of the PTM delivery.

In the case of the multicast communication service, the UE 100 in the RRC inactive state can receive the multicast MBS session with the following procedure. First, the UE 100 in the RRC inactive state receives a newly introduced system information block (also referred to as a "new SIB") from the gNB 200. The new SIB includes a configuration of a newly introduced MCCH (also referred to as "MCCH for multicast"). Second, the UE 100 in the RRC inactive state receives the MCCH for multicast from the gNB 200 based on the new SIB. The MCCH for multicast includes a PTM configuration (PTM configuration for multicast). The PTM configuration transmits a configuration related to the MTCH for multicast MBS session reception (MTCH configuration) and a configuration of the multicast MRB that is an MRB for the multicast MBS session. Third, the UE 100 in the RRC inactive state receives the MTCH based on the MCCH for multicast. The MTCH transmits the multicast MBS session (specifically, MBS data belonging to the multicast MBS session).

When the gNB 200 configures the UE 100 in the RRC inactive state to receive multicast, the gNB 200 can transmit the PTM configuration to the UE 100 by using an RRC Release message including a suspend configuration. In this case, when the UE 100 receives the RRC Release message including the PTM configuration from the gNB 200, the UE 100 transitions to the RRC inactive state and receives the multicast MBS session in the RRC inactive state.

Note that, in the following description, the known MCCH defined for MBS broadcast is also referred to as an "MCCH for broadcast" in order to distinguish from an MCCH for multicast to be newly introduced.

### (2.2.3) Group Notification

When there is temporarily no date to be transmitted to the UE 100 in a multicast MBS session of the active state, the gNB 200 may cause the UE 100 to transition to the RRC inactive state. When the multicast MBS session is made inactive, the gNB 200 may cause the UE 100 to transition to the RRC idle state or the RRC inactive state.

The gNB 200 supporting the MBS gives a notification to the UE 100 in the RRC idle state or the RRC inactive state by using a group notification mechanism when the multicast MBS session is activated by the CN 20. For example, the gNB 200 supporting the MBS may give a notification to the UE 100 in the RRC inactive state by using the group notification mechanism when the multicast MBS session has been activated and the gNB 200 has multicast MBS session data to deliver.

Upon receiving a group notification, the UE 100 connects to the network 5 again or resumes a connection, and transitions to the RRC connected state. The group notification is handled with a paging RNTI (P-RNTI) on the PDCCH, and the paging channel is monitored by the UE 100.

The paging message of the group notification includes an MBS session identifier used for paging every UE 100 in the RRC idle state and in the RRC inactive state that has joined an MBS multicast MBS session that is made relative. That is, the UE 100 is not individually paged.

When the UE 100 transitions to the RRC connected state, the UE 100 may stop monitoring a group notification related to a particular multicast MBS session. That is, the UE 100 stops checking the MBS session identifier in the paging message. The UE 100 does not monitor the group notification in cases when the UE 100 leaves this multicast MBS session, the network 5 requests the UE 100 to leave, or the network 5 releases the multicast MBS session.

Note that the group notification may be performed using an MCCH or may be performed using an MCCH change notification. In a case of using the MCCH, the determination may be made depending on whether or not the MTCH configuration of the MBS session of interest is present in the MCCH. In a case of using the MCCH change notification, the group notification may be notified in a predetermined bit of the DCI.

### (3) System Operation Example

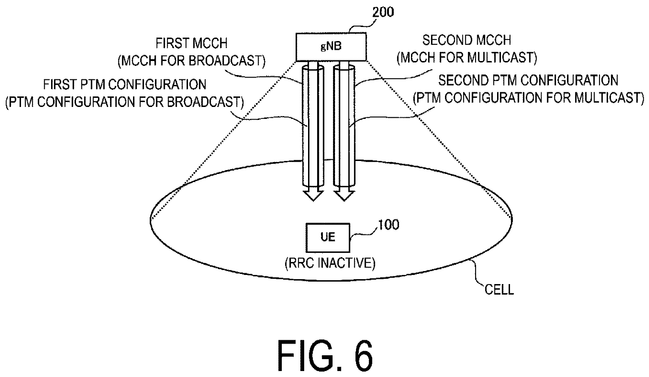

A system operation example according to the embodiment will be described below. FIG. 6 is a diagram for describing a system operation example according to the embodiment.

The gNB 200 provides two types of MCCHs in its own cell, a first MCCH for a broadcast communication service (also referred to as "MCCH for broadcast") and a second MCCH for a multicast communication service (also referred to as "MCCH for multicast").

The gNB 200 transmits, on the MCCH for broadcast, a first PTM configuration (also referred to as "PTM configuration for broadcast") including an MBS session identifier of a broadcast MBS session. The gNB 200 transmits, on the MCCH for multicast, a second PTM configuration (also referred to as "PTM configuration for multicast") including an MBS session identifier of a multicast MBS session.

Here, the quality of service (QoS) required for the multicast MBS session is different from the QoS required for the broadcast MBS session. Therefore, by providing the MCCH for multicast as a logical channel different from the MCCH for broadcast, transmitting the PTM configuration in accordance with the required QoS becomes easy. For example, a repetition period of the MCCH for multicast may be configured to be shorter than a repetition period of the MCCH for broadcast. The modification reriod of the MCCH for multicast may be configured to be shorter than the modification reriod of the MCCH for broadcast.

In this way, the two types of MCCHs, the MCCH for broadcast and the MCCH for multicast, may coexist in one cell. Therefore, the UE 100 (particularly, the UE 100 in the RRC inactive state) can receive the MCCH for broadcast (PTM configuration for broadcast) and the MCCH for multicast (PTM configuration for multicast). In the following embodiment, an operation of the mobile communication system 1 of a case that two types of MCCHs coexist will be explained.

### (3.1) First Operation Pattern

The first operation pattern according to the embodiment will be described.

Even for a multicast MBS session, the demanded QoS requirement may not be very high. For example, a membership TV broadcasting service is a kind of multicast communication service, and in most cases, the demanded QoS requirement is not so high. In a case above, transmitting the PTM configuration on the MCCH for broadcast is more efficient even in the multicast MBS session, and a method of transmitting the PTM configuration of the multicast MBS session on the MCCH for broadcast may be adopted.

However, only after receiving the MCCH and decoding the PTM configuration, the UE 100 can identify which PTM configuration of the MBS session is transmitted on the MCCH. Under the premise that the PTM configuration of the multicast MBS session can be transmitted on the MCCH for broadcast, the UE 100 receiving or interested in receiving the multicast communication service needs to receive and decode both of the two types of MCCHs, which causes a problem that the processing load and power consumption of the UE 100 increase.

Therefore, in the first operation pattern, the gNB 200 transmits, to the UE 100, mapping information (also referred to as "MCCH mapping information") indicating a correspondence relationship between the MBS session identifier of the MBS session (TMGI) and the type of the MCCH for transmitting the PTM configuration corresponding to the MBS session. For example, the gNB 200 transmits the MCCH mapping information using any of the RRC Release message, the system information block (SIB), or the paging message (group notification).

The UE 100 receives the MCCH mapping information from the gNB 200. Then, the UE 100, for example, in the RRC inactive state identifies the type of the MCCH to be received by itself based on the MCCH mapping information. That is, the UE 100 identifies the type of the MCCH for transmitting the PTM configuration of the MBS session that the UE 100 itself is receiving or interested in receiving, among the MCCH for broadcast and the MCCH for multicast, based on the MCCH mapping information. Accordingly, the UE 100 can receive and decode only the MCCH for transmitting the PTM configuration of the MBS session that the UE 100 itself is receiving or interested in receiving. Therefore, even when the two types of MCCHs coexist, an increase in processing load and power consumption of the UE 100 can be suppressed.

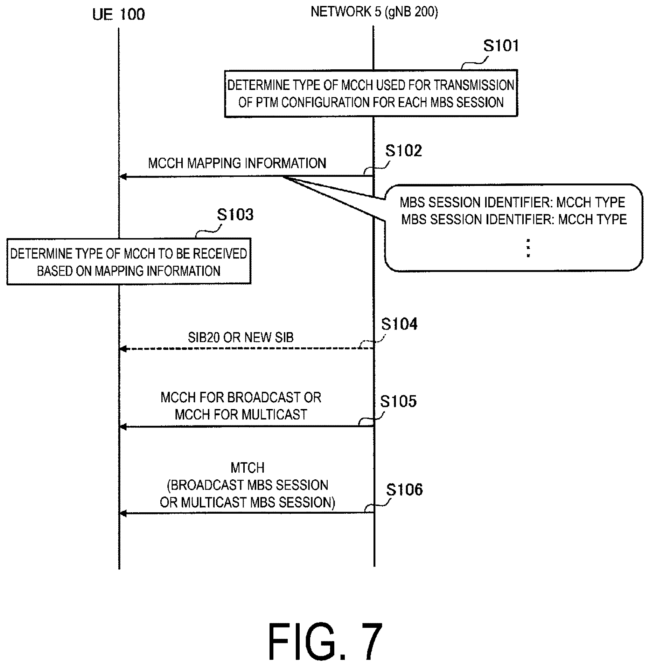

FIG. 7 is a diagram illustrating an example of the first operation pattern according to the embodiment.

In step S101, the gNB 200 determines whether to transmit the PTM configuration of a certain MBS session on the MCCH for broadcast or to transmit it on the MCCH for multicast. Here, it is assumed that the MBS session identifier of the MBS session that the UE 100 is receiving or interested in receiving is the MBS session identifier #1. The gNB 200 determines whether to notify of the PTM configuration of the MBS session identifier #1 on the MCCH for broadcast or to notify of it on the MCCH for multicast. In addition, in a case that a plurality of MBS sessions are provided in the own cell, the gNB 200 may determine whether on the MCCH for broadcast or on the MCCH for multicast to transmit the PTM configuration, for each of the plurality of MBS sessions (a plurality of MBS session identifiers).

In step S102, the gNB 200 sends MCCH mapping information to the UE 100, the MCCH mapping information indicating a correspondence relationship between the MBS session identifier of the MBS session (TMGI) and the type of an MCCH for transmitting the PTM configuration corresponding to the MBS session. The UE 100 receives the MCCH mapping information. For example, the MCCH mapping information includes the MBS session identifier and MCCH type information made correspondent with the MBS session identifier. In the illustrated example, the MCCH mapping information is in a form of a list including at least one set of the MBS session identifier and the MCCH type information.

The MCCH type information may be information indicating that the PTM configuration of the corresponding MBS session is transmitted on the MCCH for broadcast. For example, the MCCH type information may be set to 1 (true) only when the PTM configuration of the corresponding MBS session is transmitted on the MCCH for broadcast.

Alternatively, the MCCH type information may be information indicating that the PTM configuration of the corresponding MBS session is transmitted on the MCCH for multicast. For example, the MCCH type information may be set to 1 (true) only when the PTM configuration of the corresponding MBS session is transmitted on the MCCH for multicast.

Alternatively, the MCCH type information may be information indicating whether to transmit the PTM configuration of the corresponding MBS session on the MCCH for broadcast or to transmit it on the MCCH for multicast. For example, the MCCH type information may be set to one of a first value indicating the MCCH for broadcast and a second value indicating the MCCH for broadcast.

Alternatively, the MCCH type information may be a logical channel identifier (LCID) to transmit the MCCH. The correspondence relationship between the LCID and the type of the MCCH (MCCH for broadcast and MCCH for multicast) may be determined in advance. That is, the correspondence relationship may be fixed and hard-coded in the technical specification. Alternatively, the correspondence relationship may be determined by the gNB 200, and a setting value by the gNB 200 may be broadcast by system information or the like.

Alternatively, the MCCH type information may be a discontinuous reception (DRX) configuration to transmit the MCCH. In a case that the DRX configurations of the MCCH are listed and the MCCH and the DRX configuration are associated with each other by specifying an index of the DRX configuration list in each MCCH configuration, the MCCH type information may be the DRX configuration index.

Note that, under the premise that the MCCH configuration of the MCCH for broadcast is transmitted by the SIB20 and the MCCH configuration of the MCCH for multicast is transmitted using a new SIB, the MCCH mapping information (MCCH type information) may be SIB mapping information (SIB type information).

The gNB 200 may transmit the MCCH mapping information to the UE 100 in the RRC connected state with dedicated signaling. For example, when the UE 100 has joined a multicast MBS session, the gNB 200 may transmit, to the UE 100 with dedicated signaling, MCCH mapping information indicating a correspondence relationship between an MBS session identifier of the multicast MBS session and the type of an MCCH for transmitting a PTM configuration corresponding to the multicast MBS session.

The dedicated signaling may be an RRC Release message (specifically, an RRC Release message including a suspend configuration) for causing the UE 100 to transition from the RRC connected state to the RRC inactive state. The RRC Release message may include a PTM configuration of the multicast MBS session in which the UE 100 has joined. Note that, when the gNB 200 changes the PTM configuration thereafter, the changed PTM configuration may be transmitted on the MCCH (MCCH for broadcast or MCCH for multicast).

Alternatively, the gNB 200 may transmit the MCCH mapping information to the UE 100 with broadcast signaling. At this time, the UE 100 in all RRC states (RRC connected state, RRC inactive state, and RRC idle state) may be able to receive the MCCH mapping information. For example, when the gNB 200 provides a plurality of MBS sessions in its own cell, the gNB 200 may transmit, to the UE 100 with broadcast signaling, the MCCH mapping information in which each MBS session identifier of the plurality of MBS sessions is made correspondent with MCCH type information.

The broadcast signaling may be a SIB for MBS (for example, SIB20 or new SIB). Alternatively, the broadcast signaling may be a system information block type 1 (SIB1) to provide scheduling information of a plurality of SIBs including the SIB for the MBS. Alternatively, the broadcast signaling may be a paging message (group notification). The group notification includes the MBS session identifier of the activated multicast MBS session. When the group notification is used, the MCCH mapping information may be constituted of the MBS session identifier and the MCCH type information.

In step S103, the UE 100 identifies the type of the MCCH that the UE 100 itself receives, based on the MCCH mapping information of step S102. Here, the UE 100 may be in the RRC inactive state. For example, when the MCCH mapping information includes the MBS session identifier #1 of the MBS session that the UE 100 is receiving or interested in receiving, the UE 100 identifies the MCCH type to be either the MCCH for broadcast or the MCCH for multicast using the MCCH type information made correspondent with the MBS session identifier #1 in the MCCH mapping information. Note that the MBS session that the UE 100 is interested in receiving may be the multicast MBS session that the UE 100 has joined.

In step S104, the UE 100 may receive from the gNB 200 the SIB corresponding to the MCCH type identified in step S104. For example, when the UE 100 identifies the MCCH for broadcast in step S104, the UE 100 may receive the SIB20 from the gNB 200 and acquire the MCCH configuration for broadcast. When the UE 100 identifies the MCCH for multicast in step S104, the UE 100 may receive a new SIB from the gNB 200 and acquire the MCCH configuration for multicast.

In step S105, the UE 100 receives, from the gNB 200, the MCCH corresponding to the MCCH type identified in step S104 and acquires the PTM configuration. For example, when the UE 100 identifies the MCCH for broadcast in step S104, the UE 100 may receive the MCCH for broadcast from the gNB 200 and may acquire the PTM configuration for broadcast. When the UE 100 identifies the MCCH for multicast in step S104, the UE 100 may receive the MCCH for multicast from the gNB 200 and may acquire the PTM configuration for multicast.

In step S106, the UE 100 receives the MBS session on the MTCH based on the PTM configuration acquired in step S106.

Note that, in this operation example, it is assumed that one MCCH for multicast is provided in one cell. However, a plurality of MCCHs for multicast may be provided in one cell. The plurality of MCCHs for multicast may be identifiable by identifiers (indexes). Under such assumption, the MCCH type information in the MCCH mapping information may be an identifier (index) of any of the plurality of MCCHs for multicast, a logical channel identifier (LCID), and/or a corresponding DRX configuration index.

### (3.2) Second Operation Pattern

A second operation pattern according to the embodiment will be described focusing on differences from the above-described first operation pattern. Note that the second operation pattern may be performed in combination with the above described first operation pattern.

As described above, in a case where two types of MCCHs coexist, when the gNB 200 transmits the PTM configuration of one MBS session on both the MCCH for broadcast and the MCCH for multicast, the UE 100 does not know as to which PTM configuration to follow, and an unexpected error may occur. In particular, when different PTM configurations are included for the same MBS session identifier in both the MCCH for broadcast and the MCCH for multicast, there is a high possibility that an error occurs in the UE 100.

In the second operation pattern, the gNB 200 controls the MCCH transmission so as not to transmit the PTM configuration including the same MBS session identifier in the MCCH for broadcast and in the MCCH for multicast. That is, when the gNB 200 provides the MCCH for broadcast and the MCCH for multicast in its own cell, the gNB 200 controls such that the PTM configuration related to one MBS session identifier is transmitted only in either one MCCH (that is, not transmitted in both MCCHs). This ensures that the PTM configuration of the same MBS session is not included in the PTM configuration for broadcast and in the PTM configuration for multicast, and thus occurring of an unexpected error can be suppressed.

The UE 100 performs an MBS reception operation by assuming that the PTM configuration including the same MBS session identifier is not transmitted on the MCCH for broadcast and on the MCCH for multicast. When the UE 100 itself has not joined the multicast MBS session, the UE 100 may apply the PTM configuration for broadcast received on the MCCH for broadcast. In other words, as for the MBS session, even when the PTM configuration is provided on the MCCH for multicast, the UE 100 does not apply (ignores) the PTM configuration. On the other hand, when the UE 100 itself has joined the multicast MBS session, the UE 100 may apply the PTM configuration for multicast received on the MCCH for multicast. In other words, as for the MBS session, even when the PTM configuration is provided on the MCCH for broadcast, the UE 100 does not apply (ignores) the PTM configuration. Such operation may be performed by the UE 100 in the RRC inactive state.

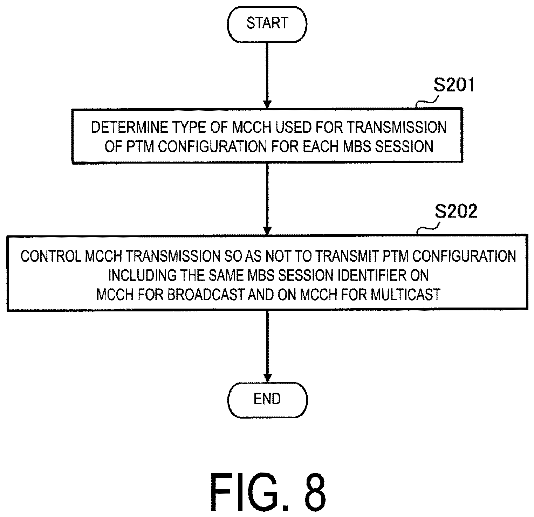

FIG. 8 is a diagram illustrating an operation example of the gNB 200 according to the second operation pattern.

In step S201, the gNB 200 determines the type of MCCH used for transmission of the PTM configuration for each MBS session provided in its own cell.

In step S202, the gNB 200 controls the MCCH transmission such that the PTM configuration including the same MBS session identifier is not transmitted on the MCCH for broadcast and on the MCCH for multicast.

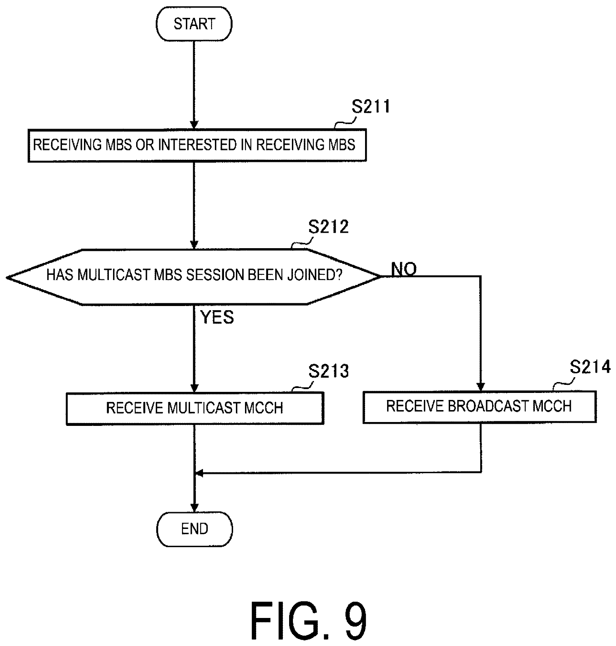

FIG. 9 is a flowchart illustrating an operation example of the UE 100 according to the second operation pattern.

In step S211, the UE 100 is receiving an MBS or is interested in receiving an MBS. Here, the UE 100 may be in the RRC inactive state.

When the UE 100 has joined the multicast MBS session (step S212: YES), in step S213, the UE 100 receives the MCCH for multicast from the gNB 200. In this case, the UE 100 receives the multicast MBS session on the MTCH based on the PTM configuration for multicast acquired on the MCCH for multicast. In other words, the UE 100 gives priority to the PTM configuration acquired on the MCCH for multicast.

On the other hand, when the UE 100 has not joined the multicast MBS session (step S212: NO), in step S214, the UE 100 receives the MCCH for broadcast from the gNB 200. In this case, the UE 100 receives the broadcast MBS session on the MTCH based on the PTM configuration for broadcast acquired on the MCCH for broadcast. In other words, the UE 100 gives priority to the PTM configuration acquired on the MCCH for broadcast.

### (4) Other Embodiments

Although the multicast reception in the RRC inactive state has been mainly described in the above-described embodiments, the operations according to the above-described embodiments may also be applied to multicast reception in the RRC idle state. With respect to the RRC idle state, the above-described RRC resume (Resume) can be read as RRC establishment (Establishment).

The operation flows described above can be separately and independently implemented and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

That is, the UE 100 may be a terminal function unit (a type of communication module) for a base station to control a repeater that performs signal relay. Such terminal function unit is referred to as an MT. Examples of the MT include a Network Controlled Repeater (NCR)-MT, and a Reconfigurable Intelligent Surface (RIS)-MT, in addition to the IAB-MT.

The term "network node" mainly means a base station but may also mean a core network apparatus or a part (CU, DU, or RU) of the base station. The network node may include a combination of at least a part of the apparatus of the core network and at least a part of the base station.

A program causing a computer to execute each of the processing performed by the UE 100 or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

The functions achieved by the UE 100 or the gNB 200 (the network node) may be implemented in a circuitry or a processing circuitry programmed to perform the described functions, including a general-purpose processor, a special-purpose processor, an integrated circuit, application specific integrated circuits (ASICs), a central processing unit (CPU), a known circuit, and/or combinations thereof. The processor may include transistors and other circuits and may be considered a circuitry or a processing circuitry. The processor may be a programmed processor that executes a program stored in the memory. As used herein, a circuitry, a unit, and means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

This application claims priority to US Provisional Patent Application No. 63/494322 (filed on April 5, 2023), the contents of which are incorporated herein by reference in their entirety.

### (5) Supplementary Notes

Features relating to the embodiments described above are described below as supplements.

### (Supplementary Note 1)

A communication method used in a mobile communication system for providing a multicast/broadcast service (MBS), the communication method including the steps of: providing, by the network node, two types of multicast control channels (MCCHs) being a first MCCH for a broadcast communication service and a second MCCH for a multicast communication service on a cell of the network node; and
transmitting, by the network node to a user equipment, mapping information indicating a correspondence relationship between an MBS session identifier of an MBS session and a type of the MCCH for transmitting a Point-to-Multipoint (PTM) configuration corresponding to the MBS session.

### (Supplementary Note 2)

The communication method according to Supplementary Note 1 in which,
the transmitting includes transmitting the mapping information using any of an RRC release message, a system information block (SIB), or a paging message.

### (Supplementary Note 3)

The communication method according to Supplementary Note 1 or 2, further including the steps of:
receiving, by the user equipment, the mapping information; and
identifying, by the user equipment, the type of the MCCH to be received by the user equipment based on the mapping information.

### (Supplementary Note 4)

The communication method according to Supplementary Note 3, further including: receiving, by the user equipment in an RRC inactive state, the MCCH of the determined type.

### (Supplementary Note 5)

A communication method used in a mobile communication system for providing a multicast/broadcast service (MBS), the communication method including:
transmitting, by a network node, a first Point-To-Multipoint (PTM) configuration including an MBS session identifier of a broadcast MBS session on a first multicast control channel (MCCH) for a broadcast communication service;
transmitting, by the network node, a second PTM configuration including an MBS session identifier of a multicast MBS session on a second MCCH for a multicast communication service; and
controlling, by the network node, MCCH transmission so as not to transmit a PTM configuration including the same MBS session identifier on the first MCCH and on the second MCCH.

### (Supplementary Note 6)

The communication method according to Supplementary Note 5, including the steps of: applying the first PTM configuration received on the first MCCH when a user equipment has not joined the multicast MBS session; and
applying the second PTM configuration received on the second MCCH when the user equipment has joined the multicast MBS session.

### (Supplementary Note 7)

The communication method according to Supplementary Note 6, in which
the applying of the second PTM configuration includes applying the second PTM configuration by the user equipment in an RRC inactive state.

### REFERENCE SIGNS

1: Mobile communication system
5: Network
10: RAN
20: CN
100: User equipment (UE)
110: Receiver
120: Transmitter
130: Controller
200: gNB (Base station)
210: Transmitter
220: Receiver
230: Controller
240: Backhaul communicator

## Claims

1. A communication method used in a mobile communication system for providing a multicast/broadcast service (MBS), the communication method comprising the steps of:
providing, by a network node to a user equipment, a PTM configuration used to receive a multicast session via a radio resource control (RRC) release message to cause the user equipment to transition to an RRC inactive state; and
transmitting, by the network node to the user equipment, the updated PTM configuration by using a multicast control channel (MCCH).

2. The communication method according to claim 1, comprising:
notifying, by the network node, the user equipment of information on a multicast session that can be received in the RRC inactive state using the RRC release message.

3. A communication method used in a mobile communication system for providing a multicast/broadcast service (MBS), the communication method comprising the steps of:
providing, by a network node, two types of multicast control channels (MCCHs) being a first MCCH for a broadcast communication service and a second MCCH for a multicast communication service; and
transmitting, by the network node to a user equipment, mapping information indicating a correspondence relationship between an MBS session identifier of an MBS session and a type of the MCCH configured to transmit a Point-to-Multipoint (PTM) configuration corresponding to the MBS session.

4. The communication method according to claim 3, wherein
the transmitting comprises transmitting the mapping information using any of an RRC release message, a system information block (SIB), or a paging message.

5. The communication method according to claim 3 or 4, further comprising the steps of:
receiving, by the user equipment, the mapping information; and
identifying, by the user equipment, the type of the MCCH to be received by the user equipment based on the mapping information.

6. The communication method according to claim 5, further comprising:
receiving, by the user equipment in an RRC inactive state, the MCCH of the determined type.

7. A communication method used in a mobile communication system for providing a multicast/broadcast service (MBS), the communication method comprising the steps of:
transmitting, by a network node, a first Point-To-Multipoint (PTM) configuration comprising an MBS session identifier of a broadcast MBS session on a first multicast control channel (MCCH) for a broadcast communication service;
transmitting, by the network node, a second PTM configuration comprising an MBS session identifier of a multicast MBS session on a second MCCH for a multicast communication service; and
controlling, by the network node, MCCH transmission so as not to transmit a PTM configuration comprising the same MBS session identifier on the first MCCH and on the second MCCH.

8. The communication method according to claim 7, further comprising the steps of:
applying the first PTM configuration received on the first MCCH when a user equipment has not joined the multicast MBS session; and
applying the second PTM configuration received on the second MCCH when the user equipment has joined the multicast MBS session.

9. The communication method according to claim 8, wherein
the applying of the second PTM configuration comprises applying the second PTM configuration by the user equipment in an RRC inactive state.
